# EUROPEAN PATENT APPLICATION

(11) **EP 4 822 972 A1**
(43) Date of publication of application: **14.10.2026**
(21) Application number: 26166432.0
(22) Date of filing: 20.03.2026
(51) Int. Cl.: H02M 1/36, H02M 3/335, H02M 1/00

(54) **VOLTAGE CONVERTER AND METHOD FOR CONTROLLING A VOLTAGE CONVERTER**

(30) Priority: 07.04.2025 IN 202511033919; 22.05.2025 DE 102025119902
(71) Applicant: Eaton Intelligent Power Limited, D04 Y0C2 Dublin 4 (IE)
(72) Inventor: KUMBHAR, Pravin, 415311 NEVARI, MAHARASHTRA (IN); MEHTA, Jaimin Nitinkumar, 390009 MAKARPURA, VADODARA, GUJARAT (IN); DEY, Somdut, 713130 KATWA, WEST BENGAL (IN); MANE, Jaya Aniruddha, 422101 NASHIK ROAD NASHIK, MAHARASTHRA (IN); TRIVEDI, Shashank, 261141 MAHOLI, UTTAR PRADESH (IN); DE, Sukumar, 560037 BANGALORE, KARNATAKA (IN); SAHA, Raja, 700129 KOLKATA, WEST BENGAL (IN); AWCHAR, Shivaji, 431505 PARBHANI, MAHARASHTRA (IN); SINGH, Omprakash, 249411 HARIDWAR, UTTARAKHAND (IN); SHARMA, Shantanu, 411028 PUNE, MAHARASHTRA (IN)
(74) Representative: Epping - Hermann - Fischer

(57) **Abstract**

A voltage converter (10) comprises a first voltage converter side (11), a second voltage converter side (12), a top DC/DC converter (20) with a first top side (21) and a second top side (22), a bottom DC/DC converter (30) with a first bottom side (31) and a second bottom side (32), a switching circuit (13), and a controller (14). The first top side (21) and the first bottom side (31) are coupled in parallel to the first voltage converter side (11). The controller (14) controls the switching circuit (13) such that the second top side (22) and the second bottom side (32) are coupled to the second voltage converter side (12) in parallel in a parallel operation (OP) or in series in a series operation (OS). Moreover, a method for controlling a voltage converter (10) is provided.

## Description

### TECHNICAL FIELD

The disclosure is related to a voltage converter and a method for controlling a voltage converter.

### BACKGROUND

The voltage converter is realized as DC/DC converter. For example, an arrangement comprises the voltage converter, a battery and an AC/DC converter. The battery is coupled e.g. via the voltage converter and the AC/DC converter to a grid. The battery is e.g. a part of an electric vehicle.

It is an objective of the present application to provide a voltage converter and a method for controlling a voltage converter that efficiently converts a DC voltage to a DC voltage.

This objective is achieved by the subject-matter of the independent claims. Further embodiments and developments are given in the dependent claims.

### SUMMARY

In an embodiment, a voltage converter comprises a first voltage converter side, a second voltage converter side, a top DC/DC converter with a first top side and a second top side, a bottom DC/DC converter with a first bottom side and a second bottom side, a switching circuit, and a controller. The first top side and the first bottom side are coupled in parallel to the first voltage converter side. The controller is configured to control the switching circuit such that the second top side and the second bottom side are coupled to the second voltage converter side in parallel in a parallel operation or in series in a series operation.

Advantageously, the voltage converter is configured as DC/DC converter. The DC/DC converter can be named DC-to-DC converter. The voltage converter can generate a high output current at the second voltage converter side in case of the parallel operation. The voltage converter can generate a high output voltage at the second voltage converter side in case of the series operation. Thus, the voltage converter operates in different modes depending on a load connected to the second voltage converter side.

In an example, the voltage converter is realized to operate in an input parallel output series configuration, abbreviated IPOS configuration, and in an input parallel output parallel configuration, abbreviated IPOP configuration. The parallel operation can be named parallel mode or output parallel mode. The series operation can be named series mode or output series mode.

In an example, the voltage converter is configured as a bi-directional converter.

In an example, the switching circuit comprises switches. The switches are realized as contactors or relays.

In an embodiment of the voltage converter, the voltage converter is configured to provide power from the first voltage converter side to the second voltage converter side in a first mode and to provide power from the second voltage converter side to the first voltage converter side in a second mode. Thus, the voltage converter is bi-directional.

In an embodiment of the voltage converter, after a start of the first mode, the controller is configured to operate the switching circuit in the parallel operation, then to switch the switching circuit from the parallel operation to the series operation in a change-over mode and then to operate the switching circuit in the series operation. The change-over mode lasts a non-zero change-over duration.

In an embodiment of the voltage converter, the controller is configured to set the top DC/DC converter and the bottom DC/DC converter in an idle state during the change-over mode. In an example, idle state means that no current flows through the terminals of the second top side and through the terminals of the second bottom side.

In an embodiment of the voltage converter, in the parallel operation, the controller is configured to operate first in a pre-charge mode and second in a constant current mode.

In an embodiment of the voltage converter, in the pre-charge mode during the parallel operation, the controller is configured to control the top DC/DC converter and the bottom DC/DC converter such that an output voltage of the voltage converter rises up to a pre-charge voltage value and an output current is less than an initial reference current value.

In an embodiment of the voltage converter, in the constant current mode during the parallel operation, the controller is configured to control the top DC/DC converter and the bottom DC/DC converter such that the output current rises up to a final reference current value and remains at the final reference current value, whereas the output voltage rises up to a change-over threshold value.

In an embodiment of the voltage converter, in the series operation, the controller is configured to operate first in a further constant current mode and second in a constant volage mode.

In an embodiment of the voltage converter, in the further constant current mode during the series operation, the controller is configured to control the top DC/DC converter and the bottom DC/DC converter such that the output current rises up to the final reference current value and remains at the final reference current value. In this period, the output voltage rises from the change-over threshold value up to a final reference voltage value. The final reference voltage value can be named upper reference voltage value.

In an embodiment of the voltage converter, in the constant voltage mode during the series operation, the controller is configured to control the top DC/DC converter and the bottom DC/DC converter such that the output voltage remains at the final reference voltage value. In this period, the output current decreases. In case e.g. a battery is connected to the second voltage converter side, the output current decreases due to an increase of a battery voltage.

In an embodiment of the voltage converter, the controller is configured to generate or to determine a top phase angle of a top PWM signal and a bottom phase angle of a bottom PWM signal. The controller or a circuit downstream of the controller is configured to provide the top PWM signal to the top DC/DC converter and the bottom PWM signal to the bottom DC/DC converter. PWM is the abbreviation for pulse-width modulation.

In an example, the top phase angle represents a phase shift between top primary side PWM's and secondary side PWM's, and the bottom phase angle represents the phase shift between the bottom primary side PWM's and the secondary side PWM's. A duty cycle is constant at 50%. The parameters are selected in a such way that the maximum power transfer happens in positive direction at +60 degree phase shift and in negative direction at -60 degree phase shift.

In embodiment of the voltage converter, a duty cycle of the top PWM signal is constant; for example the duty cycle of the top PWM signal has the value 50%. A duty cycle of the bottom PWM signal is constant; for example the duty cycle of the bottom PWM signal has the value 50%. For example, the top phase angle represents a phase shift between a top primary side PWM signal and a top secondary side PWM signal. The bottom phase angle represents a phase shift between a bottom primary side PWM signal and the bottom secondary side PWM signal. The top primary side PWM signal is applied to a primary side of the top DC/DC converter. The top secondary side PWM signal is applied to a secondary side of the top DC/DC converter. The bottom primary side PWM signal is applied to a primary side of the bottom DC/DC converter. The bottom secondary side PWM signal is applied to a secondary side of the bottom DC/DC converter. In case the primary side of the top DC/DC converter comprises a number N of phases or branches then the top primary side PWM signal comprises the number N of values (e.g. the number N is one, two, three or larger than three). In case the secondary side of the top DC/DC converter comprises a number N1 of phases or branches then the top secondary side PWM signal comprises the number N1 of values (e.g. N=N1). Correspondingly, in an example, the bottom primary side PWM signal comprises a number N2 of values and the bottom secondary side PWM signal comprises a number N3 of values (e.g. N2=N3).

In an alternative example, an angle represents a duty cycle of a PWM signal. The angle is in a range between 0° and 360°. The duty cycle is commonly expressed as a percentage in a range between 0% and 100% or as a ratio in a range between 0 and 1.For example, the top phase angle represents a top duty cycle of the top PWM signal. The bottom phase angle represents a bottom duty cycle of the bottom PWM signal. The top duty cycle is e.g. a function of the top phase angle, e.g. it is proportional to the top phase angle. The bottom duty cycle is a function of the bottom phase angle, e.g. it is e.g. proportional to the bottom phase angle.

In an embodiment of the voltage converter, the controller is configured to generate the top phase angle of the top PWM signal and the bottom phase angle of the bottom PWM signal as a function of a difference of an actual top voltage at the second top side and an actual bottom voltage at the second bottom side.

In an embodiment of the voltage converter, the controller comprises a voltage feed-forward controller having inputs for receiving the difference of the actual top voltage and the actual bottom voltage, an upper limit and a lower limit. The voltage feed-forward controller is configured to generate an output forward signal as a function of the signals at the inputs of the voltage feed-forward controller. The controller is configured such that the top phase angle and the bottom phase angle depend on the output forward signal.

In a further development of the voltage converter, if the output forward signal increases the top phase angle, then the output forward signal decreases the bottom phase angle. If the output forward signal decreases the top phase angle, then the output forward signal increases the bottom phase angle.

In an embodiment of the voltage converter, in the series operation, the controller is configured to generate the top phase angle and the bottom phase angle both as a function of one value of a group consisting of an actual top current of the top DC/DC converter and an actual bottom current of the bottom DC/DC converter. Typically, the controller is configured to generate the top phase angle and the bottom phase angle both as a function of the actual top current.

In a further development of the voltage converter, in the series operation, the controller is configured such that the top phase angle and the bottom phase angle depend on the output forward signal and in addition depend on one value of the group consisting of the actual top current and the actual bottom current.

In an embodiment of the voltage converter, in the parallel operation, the controller is configured to generate the top phase angle as a function of the actual top current and to generate the bottom phase angle as a function of the actual bottom current.

In a further development of the voltage converter, in the parallel operation, the controller is configured to generate the top phase angle as a function of the actual top current and of the output forward signal and to generate the bottom phase angle as a function of the actual bottom current and of the output forward signal.

In an example, the actual top current is an output current at the second top side of the top DC/DC converter. The actual bottom current is an output current at the second bottom side of the bottom DC/DC converter.

In an embodiment of the voltage converter, the controller comprises a top current controller and a bottom current controller.

In a further development of the voltage converter, the top current controller has inputs for receiving an upper current limit, a lower current limit and a difference of a top-bottom reference current and the actual top current and is configured to generate a top current output signal as a function of the signals at the inputs of the top current controller.

In a further development of the voltage converter, the bottom current controller has inputs for receiving an upper current limit, a lower current limit and a difference of the top-bottom reference current and the actual bottom current and is configured to generate a bottom current output signal as a function of the signals at the inputs of the bottom current controller.

In an embodiment of the voltage converter, the controller comprises a voltage controller having inputs for receiving an upper limit, a lower limit and a sum of the actual top voltage at the second top side and the actual bottom voltage at the second bottom side and is configured to generate the upper current limit as a function of the signals at the inputs of the voltage controller.

In an embodiment of the voltage converter, the top DC/DC converter and the bottom DC/DC converter are realized as dual-active-bridge DC/DC converters, abbreviated DAB DC/DC converters.

In an embodiment of the voltage converter, the top DC/DC converter and the bottom DC/DC converter are realized as three-phase DC/DC converters.

In a further development of the voltage converter, the top DC/DC converter and the bottom DC/DC converter are realized as three-phase DAB DC/DC converters.

In an embodiment of the voltage converter, the controller is realized as one of a group consisting of a microcontroller, a microprocessor, a personal computer, a net of microprocessors and a net of microcontrollers. The controller performs the above mentioned evaluations and calculations on-line using code. The controller comprises a non-transitory processor/computer-readable medium. The medium comprises e.g. software code, firmware code, reference values, duration values etc. The controller operates on-line using software code and/or firmware code.

In an embodiment, an arrangement comprises the voltage converter and a battery connected to the second voltage converter side. The arrangement further comprises e.g. an AC/DC converter connected to the first voltage converter side. The AC/DC converter couples e.g. the first voltage converter side to a grid. The battery is e.g. a part of an electric vehicle. The AC/DC converter is realized as a bi-directional converter. The AC/DC converter can be named AC-to-DC converter.

In an embodiment, a method for controlling a voltage converter comprises the following steps:
- controlling a switching circuit by a controller such that a second top side of a top DC/DC converter and a second bottom side of a bottom DC/DC converter are coupled to a second voltage converter side in parallel in a parallel operation and
- controlling the switching circuit by the controller such that the second top side and the second bottom side are coupled to the second voltage converter side in series in a series operation.

The voltage converter comprises a first voltage converter side, the second voltage converter side, the top DC/DC converter, the bottom DC/DC converter, the switching circuit and the controller. A first top side of the top DC/DC converter and a first bottom side of the bottom DC/DC converter are coupled in parallel to the first voltage converter side.

Advantageously, by changing from the parallel operation to the series operation an output voltage of the voltage converter at the second voltage converter side can be increased.

The voltage converter and the arrangement are particularly suitable for the method for controlling a voltage converter. Features described in connection with the voltage converter or the arrangement can therefore be used for the method and vice versa.

In an embodiment, the method further comprises providing power by the voltage converter from the first voltage converter side to the second voltage converter side in a first mode and providing power from the second voltage converter side to the first voltage converter side in a second mode.

In an embodiment, the method further comprises operating the switching circuit by the controller after a start of the first mode in the parallel operation, then switching the switching circuit from the parallel operation to the series operation in a change-over mode and then operating the switching circuit in the series operation.

In an example, DC is the abbreviation for direct current. AC is the abbreviation for alternating current.

In an example, the voltage converter is implemented as Dual Active Bridge converter, abbreviated DAB converter. The controller of the voltage converter balances output parameters between stacks of multiphase DAB converters to support a wide DC output voltage range at the second voltage converter side which is an output. The voltage converter realizes a control technique to balance output parameters of the multiphase DAB when connected in series or parallel to have wide output voltage range operation. Moreover, the voltage converter realizes a technique to switch across different modes. The proposed algorithm can be used in a high voltage environment. The voltage converter is e.g. a part of an electric vehicle infrastructure.

In an example, the controller of the voltage converter has an algorithm that reconfigures the control architecture. In case of series operation, voltage balancing is activated and in case of parallel operation, current balancing is activated.

In an example, the voltage converter is used in a DC charger application operating for higher range voltages for series-parallel combination. The voltage converter provides sufficient gain variation. In such scenarios, the desired output voltage and output current are achieved by connecting multiple DAB converters in series or parallel. This series-parallel combination may create unbalance in output voltages or output currents which is avoided by the proposed voltage converter. In such scenarios, the proposed control technique provides a methodology to execute different modes of DAB operations with proper balance in output voltages and output currents.

In an example, dual active bridge converters gain popularity due to their high-power density and their bidirectional property specially in electro-vehicle charging application. To meet wide output parameter requirements (referring to voltage and current), multiple DAB converters are connected either in series or in parallel. Due to parameter variation, ageing, thermal degradation etc. there could be unbalance in output parameters of DAB converters. The proposed control technique balances output voltages and output currents across the operating range. Moreover, the voltage converter switches across different modes by reconfiguring the switches used to connect different DAB converters based on the output voltage and current.

In an example, depending on the operating mode of DAB input parallel output series (abbreviated IPOS) or input parallel output parallel (abbreviated IPOP), the controller is reconfigured. If the DAB converters operate in IPOS, then a single voltage controller and a single current controller is used along with a voltage feed-forward controller. If the DAB converters operate in IPOP, then a single voltage controller and two current controllers are used.

In an example, the voltage feed-forward controller is used to balance output voltages of the DAB converters operating in series operation. A switching across different modes is implemented by reconfiguring the switches used to connect different DAB converters based on the output voltage and current. When a battery voltage is above a change-over threshold, switches are reconfigured safely by looking in to output voltages and current and controlling pulse-width modulators, abbreviated PWMs.

In an example, two dual active bridge converters (DAB converters) with operating modes for their connection in parallel and series are configured to vary the output voltages and currents of the two DAB converters.

In an example, the voltage feed-forward controller is used to balance output voltage of the DAB converters operating in series operation.

In an example, a switching across different modes occurs by reconfiguring the switches used to connect different DAB converters based on a battery charge status.

### BRIEF DESCRIPTION OF THE DRAWINGS

The following description of figures of examples or embodiments may further illustrate and explain aspects of the voltage converter and the method for controlling a voltage converter. Arrangements, devices and circuit blocks with the same structure and the same effect, respectively, appear with equivalent reference symbols. As far as arrangements, devices and circuit blocks correspond to one another in terms of their function in different figures, the description thereof is not repeated for each of the following figures.
Figures 1 and 2 show an exemplary embodiment of an arrangement with a voltage converter;
Figure 3 shows an exemplary embodiment of signals, currents and voltages of an arrangement with a voltage converter;
Figures 4 and 5 show exemplary embodiments of a controller of a voltage converter;
Figures 6 and 7 show exemplary embodiments of steps of a controller of a voltage converter; and
Figure 8 shows an exemplary embodiment of signals, currents and voltages of an arrangement with a voltage converter.

### DETAILED DESCRIPTION

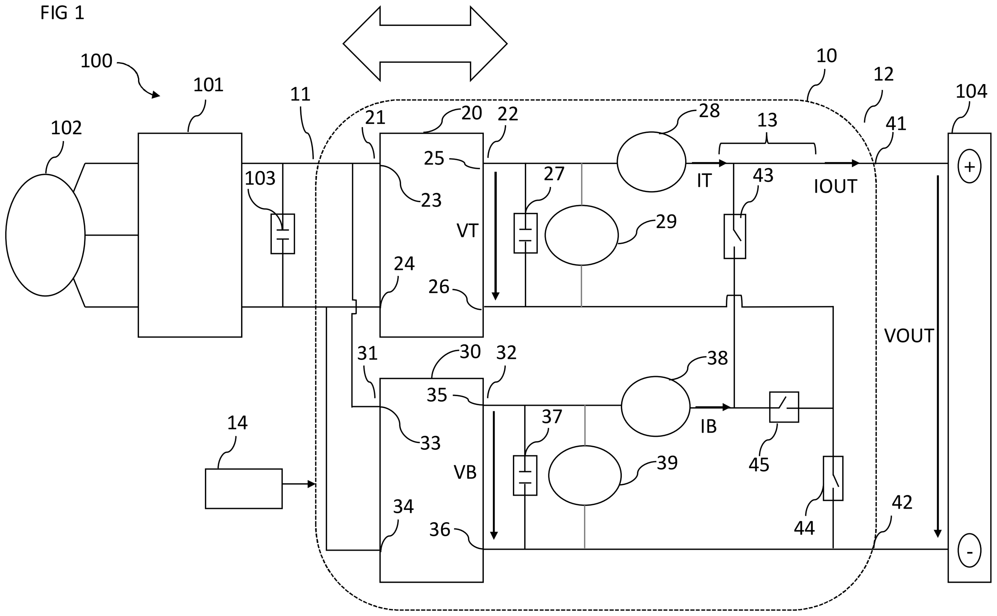

Figure 1 shows an exemplary embodiment of an arrangement 100 with a voltage converter 10. The voltage converter 10 realizes a DC charger architecture. The voltage converter 10 is e.g. a bi-directional DC to DC converter. The voltage converter 10 comprises a first voltage converter side 11, a second voltage converter side 12, a top DC/DC converter 20 +with a first top side 21 and a second top side 22, and a bottom DC/DC converter 30 with a first bottom side 31 and a second bottom side 32. Furthermore, the voltage converter 10 comprises a switching circuit 13 and a controller 14. The top DC/DC converter 20 and the bottom DC/DC converter 30 are bi-directional converters. The top DC/DC converter 20 and the bottom DC/DC converter 30 are DAB converters. The top DC/DC converter 20 and the bottom DC/DC converter 30 are three-phase converters.

The first top side 21 and the first bottom side 31 are coupled in parallel to the first voltage converter side 11. The first top side 21 and the first bottom side 31 are permanently connected in parallel to the first voltage converter side 11. An upper terminal 23 of the first top side 21 and an upper terminal 33 of the first bottom side 31 are connected to each other and to an upper terminal of the first voltage converter side 11. A lower terminal 24 of the first top side 21 and a lower terminal 34 of the first bottom side 31 are connected to each other and to a lower terminal of the first voltage converter side 11.

The second voltage converter side 12 has an upper terminal 41 and a lower terminal 42. An upper terminal 25 of the second top side 22 is connected to the upper terminal 41 of the second voltage converter side 12. A lower terminal 36 of the second bottom side 32 is connected to the lower terminal 42 of the second voltage converter side 12.

The switching circuit 13 comprises a first to a third switch 43 to 45. The first switch 43 couples an upper terminal 35 of the second bottom side 32 to the upper terminal 41 of the second voltage converter side 12. The second switch 44 couples a lower terminal 26 of the second top side 22 to the lower terminal 42 of the second voltage converter side 12. The third switch 45 couples the upper terminal 35 of the second bottom side 32 to the lower terminal 26 of the second top side 22. The first to the third switch 43 to 45 are realized as contactors or relays. The first and the second switch 43, 44 are also named parallel switch, since they are in a conducting state in a parallel operation OP, described below. The third switch 45 is also named series switch, since it is in a conducting state in a series operation OS.

The controller 14 controls the switching circuit 13 such that the second top side 22 and the second bottom side 32 are coupled to the second voltage converter side 12 in parallel in a parallel operation OP or in series in a series operation OS. The parallel operation OP can be named output parallel operation or parallel operation. The series operation OS can be named output series operation or series operation or series operating mode. The first and the second switch 43, 44 are in a conducting state in the parallel operation OP and in a non-conducting state in the series operation OS. The third switch 45 is in a non-conducting state in the parallel operation OP and in a conducting state in the series operation OS. The first to the third switch 43 to 45 are in a non-conducting state in the change-over mode COM.

The voltage converter 10 comprises a top current sensor 28, a bottom current sensor 38, a top voltage detector 29 and a bottom voltage detector 39.

The voltage converter 10 is configured to provide power from the first voltage converter side 11 to the second voltage converter side 12 in a first mode and to provide power from the second voltage converter side 12 to the first voltage converter side 11 in a second mode. As indicated by an arrow in Figure 1, the voltage converter 10 is implemented for bi-directional operation.

An actual top current IT is an output current at the second top side 22 of the top DC/DC converter 20. The actual top current IT is measured by the top current sensor 28. The top current sensor 28 is connected to the upper terminal 22 of the second top side 22. An actual bottom current IB is an output current at the second bottom side 32 of the bottom DC/DC converter 30. The actual bottom current IB is measured by the bottom current sensor 38. The bottom current sensor 38 is connected to the upper terminal 32 of the second bottom side 32.

The top voltage detector 29 measures an actual top voltage VT. The actual top voltage VT is tapped between the terminals 25, 26 of the second top side 22. The bottom voltage detector 39 measures an actual bottom voltage VB. The actual bottom voltage VB is tapped between the terminals 35, 36 of the second bottom side 32.

The generic architecture for the DC charger is as shown in figure 1. Due to environment and piece to piece variation of inductor, transformer parameters, DAB output voltage gets unbalance, and this unbalance creates circulating currents which flows from one DAB to other DAB which creates the losses. Zero voltage switching (abbreviated ZVS) operation is useful to reduce losses and increase efficiency for the operating range. The proposed control can balance the voltage and current across the DAB operating in series and parallel operation.

The voltage converter 10 operates in a DAB input parallel output series (IPOS) and in a DAB input parallel output parallel (IPOP) configuration.

The top DC/DC converter 20 is realized as a three phase top dual active bridge converter (DC to DC conversion) and the bottom DC/DC converter 30 is realized as a three phase bottom dual active bridge converter (DC to DC conversion). The three phases of the top DC/DC converter 20 are shifted with 120° to each other. The three phases of the bottom DC/DC converter 30 are shifted with 120° to each other. The arrangement 100 comprises an AC/DC converter 101. The AC/DC converter 101 is realized as three-phase active front end converter which performs AC to DC conversion bi-directionally. The arrangement 100 comprises a grid 102 being configured e.g. as a three phase grid. The arrangement 100 comprises a link capacitor 103 realized e.g. as AFE O/P DC link capacitor. The link capacitor 103 is arranged between the two input terminals of the first voltage converter side 11. AFE is the abbreviation for analog front end.

The arrangement 100 comprises a battery 104 connected to the second voltage converter side 12. The battery 104 is e.g. an EV battery.

The voltage converter 10 comprises a top capacitor 27 and a bottom capacitor 37. The top capacitor 27 is realized as DAB top O/P DC link capacitor. The bottom capacitor 37 is realized as DAB bottom O/P DC link capacitor.

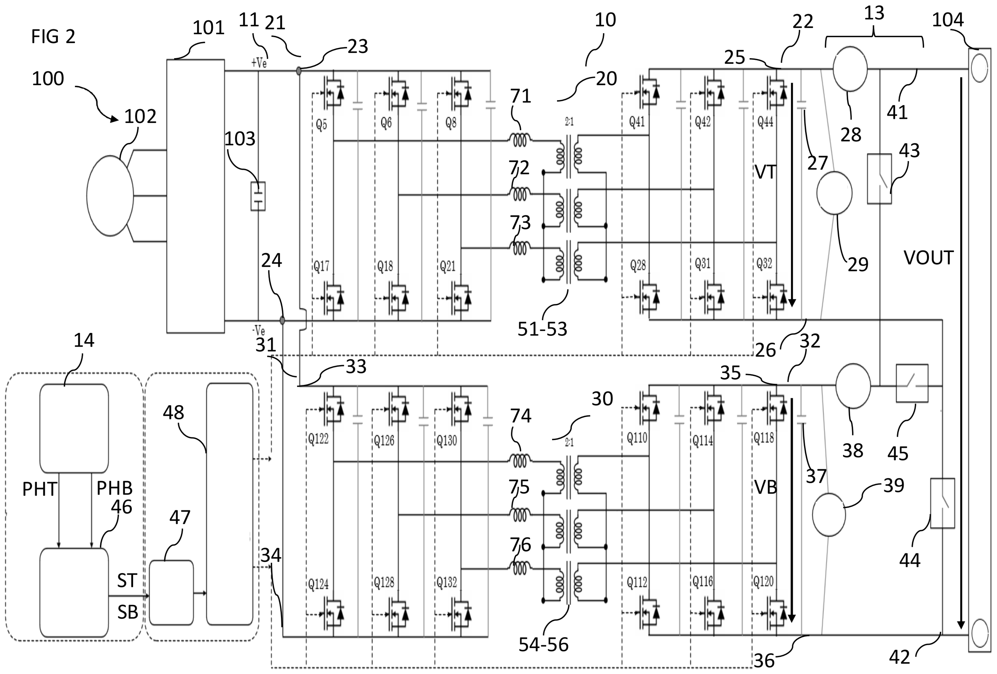

Figure 2 shows an exemplary embodiment of an arrangement 100 with a voltage converter 10 which is a further development of the embodiment shown in Figure 1. The top DC/DC converter 20 and the bottom DC/DC converter 30 are realized as dual active bridge converters. The top DC/DC converter 20 and the bottom DC/DC converter 30 are realized as three phase DC/DC converters.

The top DC/DC converter 20 and the bottom DC/DC converter 30 both comprise a transformer 51, 54 and series circuits of transistors on both sides of the transformer 51, 54. More precisely, the top DC/DC converter 20 comprises a first to a third transformer 51 to 53 and series circuits of transistors Q5, Q6, Q8, Q17, Q18, Q21, Q41, Q42, Q44, Q28, Q31, Q32 on both sides of the transformers 51 to 53. Correspondingly, the bottom DC/DC converter 30 comprises a first to a third transformer 54 to 56 and series circuits of transistors Q122, Q126, Q130, Q124, Q128, Q132, Q110, Q114, Q118, Q112, Q116, Q120 on both sides of the transformers 54 to 56. The top DC/DC converter 20 and the bottom DC/DC converter 30 both comprise an inductor 71, 74. More precisely, the top DC/DC converter 20 comprises a first to a third inductor 71 to 73 and the bottom DC/DC converter 30 comprises a first to a third inductor 74 to 76.

The voltage converter 10 comprises a PWM controller 46 with an input side connected to the controller 14. The PWM controller 46 is realized as electronic PWM configuration circuit and uses a base software. The controller 14 provides a top phase angle PHT and a bottom phase angle PHB to the PWM controller 46. The PWM controller 46 generates a top PWM signal ST using the top phase angle PHT and a bottom PWM signal SB with the bottom phase angle PHB.

The voltage converter 10 comprises a controller circuit 47 having an input side connected to the PWM controller 46. The controller circuit 47 comprises controller hardware.

The voltage converter 10 comprises a gate driver circuit 48 having an input side connected to the controller circuit 47. Outputs of the gate driver circuit 48 are coupled to control terminals of transistors of the top and the bottom DC/DC converter 20, 30. The transistors are implemented as field-effect transistors, e.g. as metal-oxide-semiconductor field-effect transistors, abbreviated MOSFETs. Alternatively, the transistors are implemented as insulated gate bipolar transistors, abbreviated IGBT.

The gate driver circuit 48 receives the top PWM signal ST and the bottom PWM signal SB or signals derived from the top PWM signal ST and the bottom PWM signal SB and generates control voltages which are applied to the control terminals of the transistors listed above.

In Figure 2, only an example for the DC/DC converters 20, 30 are shown. Alternative realization for the DC/DC converters 20, 30 are possible, e.g. with one phase or two phases or more than three phases instead of three phases.

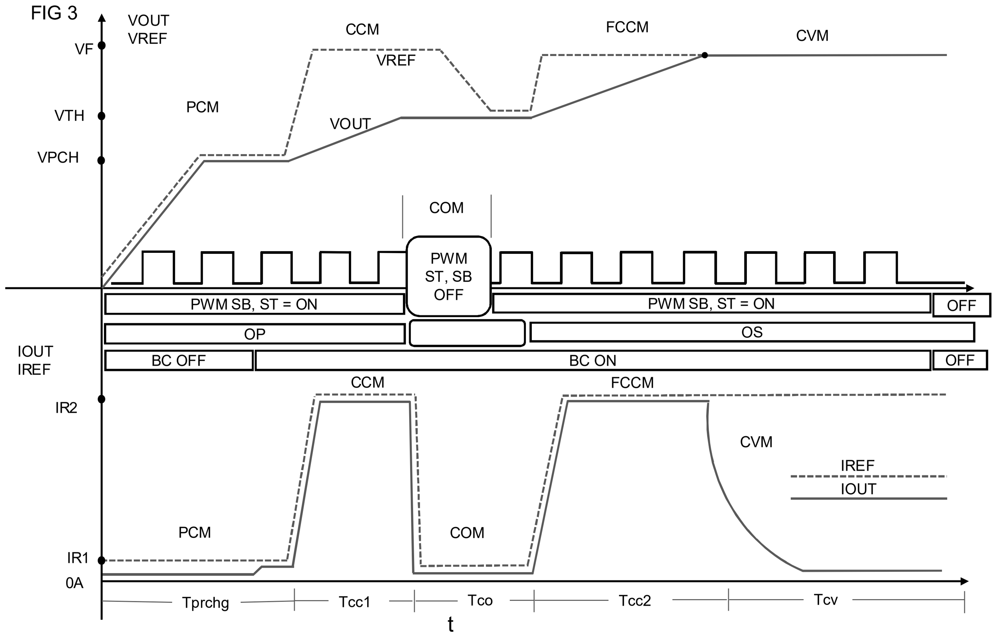

Figure 3 shows an exemplary embodiment of signals, currents and voltages of an arrangement 100 with a voltage converter 10 which is a further development of the embodiments shown in Figures 1 and 2. After a start of the first mode, the controller 14 operates the switching circuit 13 in the parallel operation OP, then switches the switching circuit 13 from the parallel operation OP to the series operation OS in a change-over mode COM and then operates the switching circuit 13 in the series operation OS. The start of the first mode is e.g. a start of a charging procedure.

In the parallel operation OP, the controller 14 operates first in a pre-charge mode PCM and second in a constant current mode CCM.

In the pre-charge mode PCM, the controller 14 controls the top DC/DC converter 20 and the bottom DC/DC converter 30 such that an output voltage VOUT of the voltage converter 10 rises up to a pre-charge voltage value VPCH and an output current IOUT is less than an initial reference current value IR1. When the output voltage VOUT reaches the pre-charge voltage value VPCH, the controller 14 starts the constant current mode CCM.

In the constant current mode CCM, the controller 14 controls the top DC/DC converter 20 and the bottom DC/DC converter 30 such that the output current IOUT rises up to a final reference current value IR2 and remains at the final reference current value IR2. In the constant current mode CCM, the output voltage VOUT rises up to a change-over threshold value VTH. When the output voltage VOUT reaches the change-over threshold value VTH, the controller 14 starts the change-over mode COM. The change-over threshold value VTH is a voltage value.

The controller 14 sets the top DC/DC converter 20 and the bottom DC/DC converter 30 in an idle state during the change-over mode COM. The idle state means that no current flows through the terminals of the second top side 22 and through the terminals of the second bottom side 32. The change-over mode COM is used for a change-over operation for series/parallel switch mode. The change-over mode COM is kept short. The output current IOUT in the change-over mode COM is less than a change-over threshold current value ITH and is ideally near to zero.

After the change-over mode COM, in the series operation OS, the controller 14 operates first in a further constant current mode FCCM and second in a constant voltage mode CVM.

In the series operation OS, in the further constant current mode FCCM, the controller 14 controls the top DC/DC converter 20 and the bottom DC/DC converter 30 such that the output current IOUT rises up to the final reference current value IR2 and remains at the final reference current value IR2. Since the output voltage VOUT is nearly or exactly at the change-over threshold value VTH, a time for rising of the output current IOUT is short. In the further constant current mode FCCM, the output voltage VOUT rises from the change-over threshold value VTH up to a final reference voltage value VF. The final reference voltage value VF can be named upper reference voltage value. When the output voltage VOUT reaches the final reference voltage value VF, the controller 14 switches from the further constant current mode FCCM to the constant voltage mode CVM.

In the series operation OS, in the constant voltage mode CVM, the controller 14 controls the top DC/DC converter 20 and the bottom DC/DC converter 30 such that the output voltage VOUT remains at the final reference voltage value VF. In the constant voltage mode CVM, the output current IOUT decreases e.g. due to the loading of the battery 104. The final reference voltage value VF is a voltage value required by the battery 104 to charge.

If the actual top voltage VT is higher than the actual bottom voltage VB, then a positive error is generated, and the controller output is a positive Phi. The higher the difference, the higher the phase angle. This phase angle is subtracted from the top controller output phase angle and added to the bottom controller output phase angle. This will add value in balancing the voltage in two DC/DC converters 20, 30 operating in series operation OS.

The converter 10 is able to change its operating mode during operation. In grid-to-vehicle charging mode, if the battery 104 with a rated voltage above the change-over threshold VTH is connected for charging, and its actual voltage (based on the state of charge) is below the change-over threshold VTH, the converter 10 initially operates in parallel operation OP based on the pre-charge voltage command by configuring the parallel switches 43, 44. When the actual voltage of the battery 104 reaches the change-over threshold VTH, the change-over mode COM occurs. First, the parallel switches 43, 44 are turned off, and the PWM signals SB, ST are disabled. A quick pre-charge happens at the battery voltage level in series operation OS. Once pre-charging is complete, the series switch 45 is turned on. Similarly, during vehicle-to-grid charging mode, the transition occurs in the same manner.

The arrangement 100 uses bi-directional converters. In both grid-to-vehicle and vehicle-to-grid charging conditions, the arrangement 100 is able to operate in either series operation OS or parallel operation OP based on a reference voltage VREF and the actual battery voltage value.

In Figure 3, the signals are shown as a function of a time t. The times have the following meaning:
Tprchg : Time for pre-charge
Tcc1 : Time used for the constant current mode CCM before change-over mode COM.
Tcc2: Time used for the further constant current mode FCCM after the change-over mode COM.
Tco: Change-over time that is the duration of the change-over mode COM.
Tcv : Time used for constant voltage mode CVM.

During a duration BC OFF (shown in Figure 3), the second voltage converter side 12 is disconnected from the battery 104 by not-shown switches. Thus, the battery 104 does not receive current during the period in which the output voltage VOUT rises up to the pre-charge voltage value VPCH. During the duration BC OFF, the second voltage converter side 12 is connected to the battery 104 by the not-shown switches.

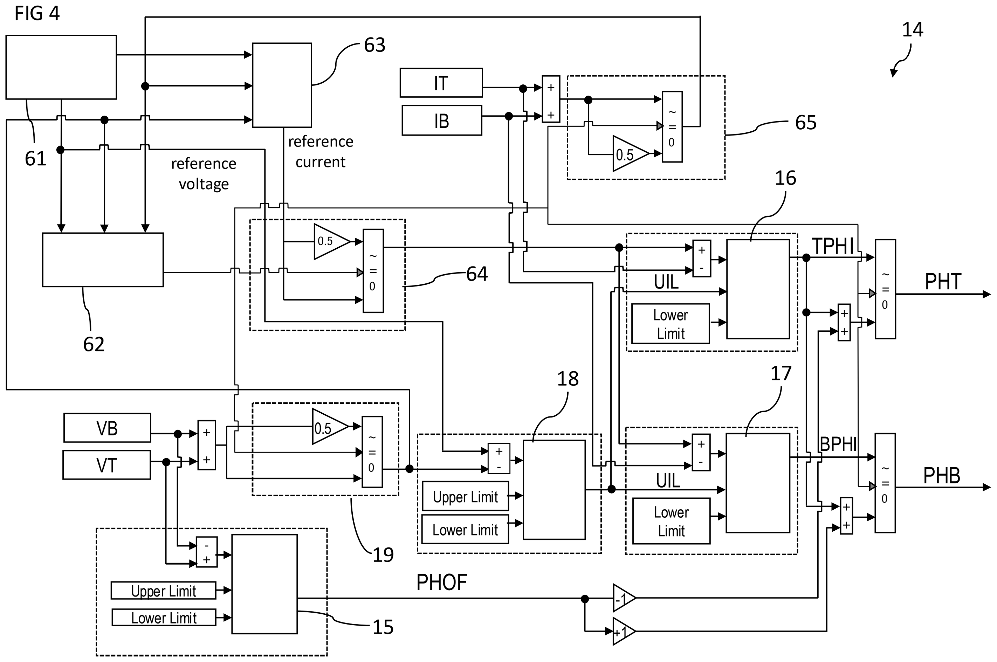

The DAB control system is auto configurable. In series operation OS, the controller 14 uses a single voltage controller 18 and a single current controller, a top current controller 16, along with a voltage feed-forward controller 15, avoiding unnecessary operation of the single current controller (e.g. a bottom current controller 17). In parallel operation OP, the DAB control system operates with a single voltage controller 18 and two current controllers 16, 17 as shown in figure 4.

The controller 14 uses a feed-forward controller: While operating in series operation OS, an output voltage unbalance can occur, causing circulating currents to flow. This circulating currents may cause the DC/DC converters 20, 30 to operate outside the ZVS range, increasing losses. By using feed-forward control to address the difference in output voltages of both stacks, the unbalance in DAB output voltages is eliminated.

Figure 4 shows an exemplary embodiment of a controller 14 of a voltage converter 10 which is a further development of the embodiments shown in Figures 1 to 3. In Figure 4, a software control architecture diagram is shown. The controller 14 shown in Figures 1 and 2 uses a software. The controller 14 operates on-line. For demonstration, blocks are shown in Figure 4. The blocks are implemented by software code. The blocks are realized e.g. as functions or routines of software code.

The controller 14 provides the top phase angle PHT for the top PWM signal ST which is applied to the top DC/DC converter 20 and the bottom phase angle PHB for the bottom PWM signal SB which is applied to the bottom DC/DC converter 30. The controller 14 generates the top phase angle PHT and the bottom phase angle PHB as a function of a difference of an actual top voltage VT at the second top side 22 and an actual bottom voltage VB at the second bottom side 32. In an example, the top phase angle PHT and the bottom phase angle PHB are outputs from the top current controller 16 and the bottom current controller 17 respectively. In an example, the top phase angle PHT and the bottom phase angle PHB are functions of outputs from the top current controller 16 and the bottom current controller 17 respectively.

The controller 14 comprises the voltage feed-forward controller 15 having inputs for receiving the difference of the actual top voltage VT and the actual bottom voltage VB, an upper limit and a lower limit. The voltage feed-forward controller 15 generates an output forward signal PHOF as a function of the signals at the inputs of the voltage feed-forward controller 15. The voltage feed-forward controller 15 is realized as a proportional controller. Alternatively the voltage feed-forward controller 15 is realized as proportional integrative controller, proportional derivative controller or proportional integrative derivative controller. The output forward signal PHOF indicates an angle. The controller 14 sets the top phase angle PHT and the bottom phase angle PHB as a function of the output forward signal PHOF. In an example, the controller 14 sets the top phase angle PHT as a function of the inverted value of the output forward signal PHOF and the bottom phase angle PHB as a function of the non-inverted value of the output forward signal PHOF. If the output forward signal PHOF increases the top phase angle PHT, then the output forward signal PHOF decreases the bottom phase angle PHB. If the output forward signal PHOF decreases the top phase angle PHT, then the output forward signal PHOF increases the bottom phase angle PHB.

In the series operation OS, the controller 14 generates the top phase angle PHT and the bottom phase angle PHB both as a function of one value of a group consisting of the actual top current IT of the top DC/DC converter 20, the actual bottom current IB of the bottom DC/DC converter 30 and a sum of the actual top current IT and the actual bottom current IB. In the parallel operation OP, the controller 14 generates the top phase angle PHT as a function of the actual top current IT and generates the bottom phase angle PHB as a function of the actual bottom current IB.

The controller 14 comprises the top current controller 16 and the bottom current controller 17. The top current controller 16 has inputs for receiving an upper current limit, a lower current limit and a difference of a top-bottom reference current and the actual top current IT. The top current controller 16 generates a top current output signal TPHI as a function of the signals at the inputs of the top current controller 16. The bottom current controller 17 has inputs for receiving an upper current limit, a lower current limit and a difference of the top-bottom reference current and the actual bottom current. The bottom current controller 17 generates a bottom current output signal BPHI as a function of the signals at the inputs of the bottom current controller 17.

The controller 14 comprises a voltage signal generator 19 which receives a value which is a sum of the actual top voltage VT and the actual bottom voltage VB. The voltage signal generator 19 generates a top-bottom actual voltage based on operation mode. The upper branch with a 0.5 multiplier is used in parallel operation OP and the lower branch is used in series operation OS.

The controller 14 comprises the voltage controller 18 having inputs for receiving an upper limit, a lower limit and a sum of the actual top voltage VT at the second top side 22 and the actual bottom voltage VB at the second bottom side 32. The voltage controller 18 generates an upper current limit UIL as a function of the signals at the inputs of the voltage controller 18. The voltage controller 18 is realized as a DAB top-bottom voltage controller.

The controller 14 comprises a generator 61 for providing a reference voltage and a reference current. The generator 61 is implemented e.g. by a memory. The reference voltage and the reference current are a DC-SEC reference voltage and reference current. DC-SEC is an abbreviation for DC supply equipment controller. The controller 14 comprises a mode detector 62 that detects the mode of operation, e.g. series operation OS and parallel operation OP. Moreover, the controller 14 comprises a current limiter 63 which is realized e.g. as power based current limiter.

The controller 14 comprises a signal generator 64. The current limiter 63 provides a power based limited reference current to the signal generator 64. The signal generator 64 generates a top-bottom voltage reference and a current reference based on the operation mode OS or OP.

Additionally, the controller 14 comprises a current detector 65 receiving at the input side a sum of a value of the actual top current IT and a value of the actual bottom current IB. The current detector 65 provides a top-bottom actual current based on the operation mode OS or OP. The controller 14 reduces an unbalancing of voltages and currents in the top and the bottom DC/DC converter 20, 30 operating in series operation OS and in parallel operation OP. The top and the bottom DC/DC converter 20, 30 are two three-phase Dual Active Bridges. The controller 14 performs a change-over operation for Series-Parallel operation selection. The controller 14 configures different controllers based on the mode of operation.

In Figure 4, the software control architecture for dual active bridge operating in IPOS-IPOP operating mode are elucidated. In parallel operation OP voltage balance is taken care by single voltage controller 18 only and currents are taken care by individual current controllers 16, 17. In case of series operation OS, voltage across top-bottom DAB 20 is balanced by the voltage controller 18 and the top current controller 16 by the voltage feed-forward controller 15. The control architecture is designed in a such way that there is less possibility of voltage-current unbalance which avoids the circulating currents to flow and thus further reduces the losses in the DAB converters.

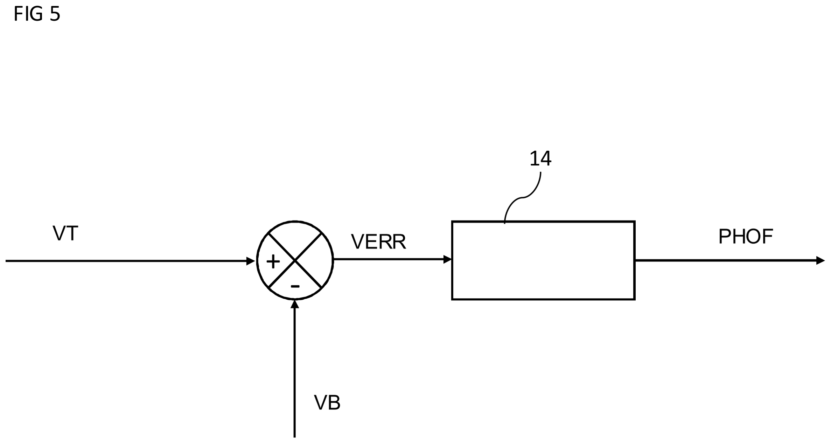

Figure 5 shows an exemplary embodiment of details of a controller 14 which is a further development of the embodiments shown in Figures 1 to 4. The voltage feed-forward controller 15 is part of the controller 14. If the actual top voltage VT is higher than the actual bottom voltage VB, then a positive error signal VERR is generated, and the voltage feed-forward controller 15 provides the output forward signal PHOF which has a positive value. The output forward signal PHOF represents a phase angle. Higher the difference, higher the phase angle. The output forward signal PHOF, a phase angle, is then subtracted from the top current output signal TPHI and added to the bottom current output signal BPHI. This improves balancing the voltages in the two DC/DC converters 20, 30 operating in series operation OS. The top current output signal TPHI can be named top controller output phase angle. The bottom current output signal BPHI can be named bottom controller output phase angle.

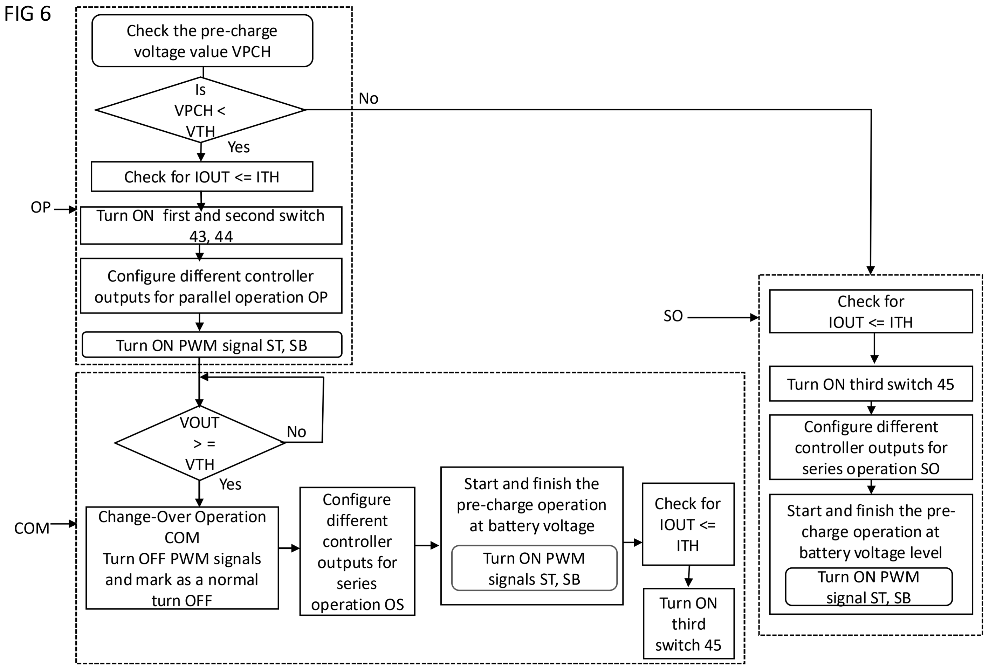

Figure 6 shows an exemplary embodiment of steps of a controller of a voltage converter 10 which is a further development of the embodiments shown in Figures 1 to 5. In Figure 6, a change-over operation or change-over mode COM for series/parallel switch mode is shown. The change-over mode COM is based on the pre-charge voltage value VPCH (which can be named reference pre-charge voltage), an actual battery voltage and the output current IOUT. If the pre-charge voltage value VPCH is less than the change-over threshold value VTH and the output current IOUT is less than a change-over threshold current value ITH, then the parallel switches 43, 44 are turned on and the switching circuit 13 configures the controller outputs with respect to the parallel operating mode OP and PWM signals SB, ST are turned ON.

The output voltage VOUT is monitored continuously: When the output voltage VOUT becomes equal to or greater than the change-over threshold value VTH, then the PWM signals ST, SB are turned off and this turn off is marked as a normal turn off. This is the change-over operation COM, whereas the output current IOUT is checked. If the output current IOUT is less than the change-over threshold current value ITH, then the series switch 45 is turned ON. After this the controller outputs are configured with respect to the series operation OS.

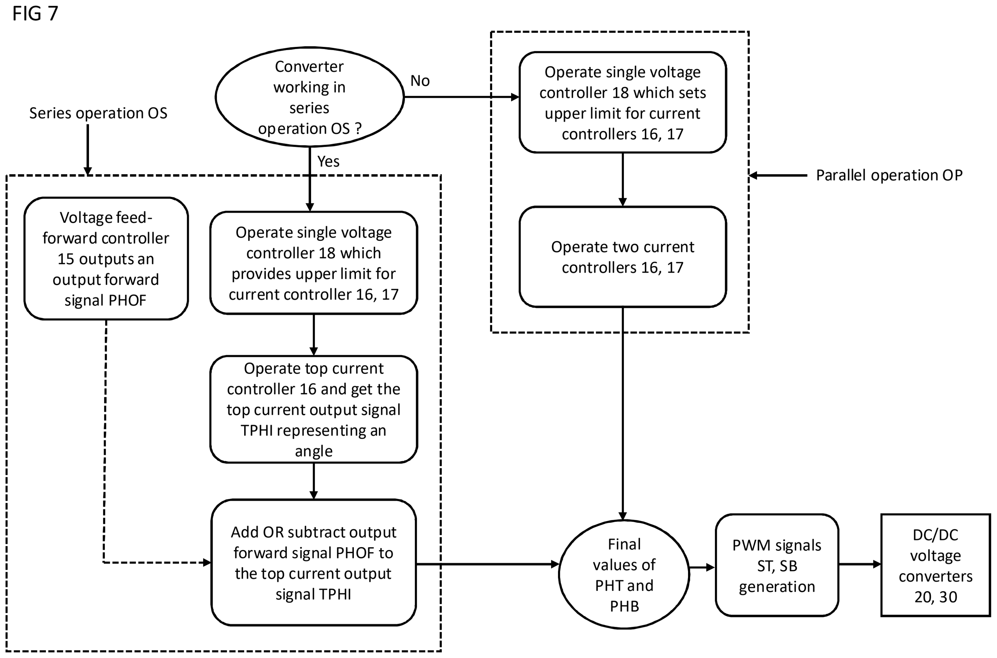

If the pre-charge voltage value VPCH is higher than the change-over threshold value VTH and the output current IOUT is less than the change-over threshold current value ITH, then the series switch 45 is turned ON. The series switch 45 is turned ON and the controller outputs are configured with respect to the DAB series operation OS. After this, the PWM signals ST, SB are turned ON. The controller configuration logic is explained in figure 7.

Change-over operation COM is based on the pre-charge voltage value VPCH, the battery actual voltage, and the DAB output current IOUT. If the pre-charge voltage value VPCH is less than change-over threshold value VTH and output current IOUT is less than some change-over threshold current value ITH, then the parallel switches 43, 44 get turned on and the controller outputs are configured with respect to the parallel operating mode OP and PWM signals SB, ST get turned ON. The output voltage VOUT is monitored continuously and when the output voltage VOUT becomes equal to or greater than the change-over threshold value VTH, then PWM signals ST, SB are turned off and this turn off is marked as a normal turn off. This is the change-over mode COM, then the output current IOUT is checked. If output current IOUT is less than change-over threshold current value ITH, then the series switch 45 gets turned ON. After this, the controller outputs are configured with respect to the series operation OS. If the pre-charge voltage value VPCH is higher than the change-over threshold value VTH and the output current IOUT is less than the change-over threshold current value ITH, then the series switch 45 gets turned ON. When the series switch 45 is turned on, the controller outputs are configured with respect to the series operation OS. After this PWM signals SB, ST are turned ON.

Figure 7 shows an exemplary embodiment of steps of a controller 14 of a voltage converter 10 which is a further development of the embodiments shown in Figures 1 to 6. Different controllers are configured based on the mode of operation.

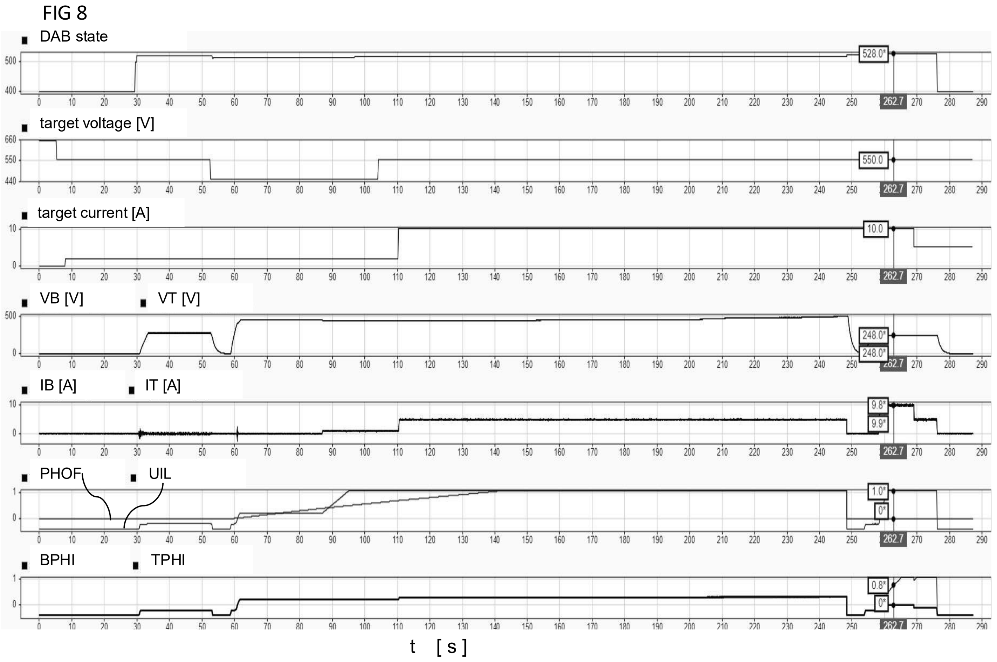

Figure 8 shows an exemplary embodiment of signals, currents and voltages of an arrangement 100 with a voltage converter 10 which is a further development of the embodiments shown in Figures 1 to 7. In Figure 8, waveforms from lab test results with the control architecture described above are shown. The results are hardware results. DAB converter outputs are controlled by the control method. The balance in output voltages as well as output currents can be seen.

The following signals are shown as a function of the time t, given in seconds:
- a DAB state (operating mode for internal reference; given in artificial units),
- a target voltage which is a requested voltage for charging, given in volts,
- a target current which is a requested current for charging given in amperes,
- the actual bottom voltage VB and the actual top voltage VT (in the example shown in Figure 8, the actual bottom voltage VB and the actual top voltage VT are approximately equal),
- the actual bottom current IB and the actual top current IT (in the example shown in Figure 8, the actual bottom current IB and the actual top current IT are approximately equal),
- the output forward signal PHOF and the upper current limit UIL (the upper current limit UIL is the signal showing steps up and down and the output forward signal PHOF is the signal showing a slope between t=60s and t=140s),
- the bottom current output signal BPHI and the top current output signal TPHI (in the example shown in Figure 8, the bottom current output signal BPHI and the top current output signal TPHI are approximately equal).

The DAB control technique balances the output voltage and current of the DAB converters 20, 30 operating in series/parallel. To operate DAB at low gain, the DAB converters 20, 30 are operated in series operation OS and in parallel operation OP which can create unbalance in voltage and current. The balance in output voltage and current in the voltage converter 10 is maintained by controlling the phase shift angles PHB, PHT. If output voltage and currents are not balanced then circulating currents flow, due to which the DC/DC converters 20, 30 will operate in non-zero voltage switching range (abbreviated non-ZVS range) which cause losses and efficiency of the voltage converter 10 decreases.

To achieve DAB output voltage balance operating in series or parallel operation OS, OP, a heavy capacitor might be added to the voltage converter 10 which adds cost for fabrication as well as increases complexity of the design. Advantageously, with the proposed control architecture without change in hardware design, the voltage balance is achieved; no hardware change is required saving time and money.

Efficiency and reliability of the voltage converter 10 gets improved with proper voltage-current balance. Effect of component ageing and piece-piece variation on the performance of the voltage converter 10 can be avoided.

To cater entire range of the output voltage VOUT, the voltage converter 10 uses a configuration with two stacks. One purpose is to be in near to ZVS boundary. These stacks are reconfigured based on the proposed architecture. ZVS operation can be achieved on a wide range of the output voltage VOUT. The single voltage converter 10 (DC-charger) with bidirectional support (voltage to grid, abbreviated V2G) can cater to entire battery voltage ranges. In an example, the control architecture can be applicable to a variety of DC/DC converters which are operating in series-parallel operation, with minimal change or no change.

The voltage converter 10 can be used in the following applications: DC-DC converter, DC charger, DC coupling energy storage or wide voltage range DC power supply.

The voltage converter 10 is configured to change from IPOP to IPOS and from IPOS to IPOP. The voltage converter 10 is appropriate e.g. for three voltage ranges of an electric vehicle, abbreviated EV. The techniques described (series/parallel and shifting from one to another) are responsible to support these huge ranges. Making three separate voltage converters will cost more than the single voltage converter 10.

The voltage converter 10 operates close to zero voltage switching, abbreviated ZVS. Efficiency is a major critical to quality item (abbreviated CTQ) for the voltage converter 10.

Operating the DC/DC converters 20, 30 with higher losses (as discussed above) not only decrease the efficiency, also increase the junction temperature which in turn reduces the reliability of the DC/DC converters 20, 30 as well as the entire voltage converter 10.

The operation using the change-over mode COM is advantageous. The change-over mode COM is completed within a short time frame to prevent the electric vehicle from detecting it as a shutdown operation. Within milliseconds, the controller 14 performs the following steps: turn off its PWM signals SB, ST, configure the series switch 45 for series operation OS, execute the pre-charge mode PCM at battery voltage, and start charging in the series operation OS. The voltage converter 10 changes its operating mode during operation. In the grid-to-vehicle charging mode, if a battery 104 with a rated voltage above the change-over threshold value VTH is connected for charging, and its present voltage (based on the state of charge) is below the change-over threshold value VTH, the voltage converter 10 initially operates in parallel operation OP based on the pre-charge voltage command by configuring the parallel switches 43, 44. When the actual voltage of the battery 104 reaches the change-over threshold value VTH, the change-over mode COM occurs. First, the parallel switches 43, 44 are turned off, and the PWM signals ST, SB are disabled. A quick pre-charge happens at the battery voltage level in series operation OS. Once pre-charging is completed, the series switch 45 is turned on.

Similarly, during a vehicle-to-grid charging mode, the transition occurs in the same manner.

The voltage converter 10 is a bi-directional converter. In both grid-to-vehicle and vehicle-to-grid charging conditions, the voltage converter 10 can operate in either series operation OS or parallel operation OP based on the reference voltage VREF and the actual battery voltage values.

The invention is not limited to the description of the embodiments. Rather, the invention comprises each new feature as well as each combination of features, particularly each combination of features of the claims, even if the feature or the combination of features itself is not explicitly given in the claims or embodiments.

### Reference numbers

- 10: voltage converter
- 11: first voltage converter side
- 12: second voltage converter side
- 13: switching circuit
- 14: controller
- 15: voltage feed-forward controller
- 16: top current controller
- 17: bottom current controller
- 18: voltage controller
- 19: voltage signal generator
- 20: top DC/DC converter
- 21: first top side
- 22: second top side
- 23-26: terminal
- 27, 37: capacitor
- 28, 38: current sensor
- 29, 39: voltage detector
- 30: bottom DC/DC converter
- 31: first bottom side
- 32: second bottom side
- 33-36: terminal
- 41: upper terminal
- 42: lower terminal
- 43-45: switch
- 46: PWM controller
- 47: controller circuit
- 48: gate driver circuit
- 51-56: transformer
- 61: generator
- 62: mode detector
- 63: current limiter
- 64: signal generator
- 65: current detector
- 71-76: inductor
- 100: arrangement
- 101: AC-DC converter
- 102: grid
- 103: link capacitor
- 104: battery
- BC OFF, BC ON: duration
- BPHI: bottom current output signal
- CCM: constant current mode
- COM: change-over mode
- CVM: constant voltage mode
- FCCM: further constant current mode
- IB: actual bottom current
- IOUT: output current
- IR1: initial reference current value
- IR2: final reference current value
- IT: actual top current
- ITH: change-over threshold current value
- OP: parallel operation
- OS: series operation
- PCM: pre-charge mode
- PHB: bottom phase angle
- PHOF: output forward signal
- PHT: top phase angle
- Q...: transistor
- SB: bottom PWM signal
- ST: top PWM signal
- t: time
- TPHI: top current output signal
- UIL: upper current limit
- VB: actual bottom voltage
- VF: final reference voltage value
- VOUT: output voltage
- VPCH: pre-charge voltage value
- VERR: error signal
- VREF: reference voltage
- VT: actual top voltage
- VTH: change-over threshold value

## Claims

1. A voltage converter (10), comprising
- a first voltage converter side (11),
- a second voltage converter side (12),
- a top DC/DC converter (20) with a first top side (21) and a second top side (22),
- a bottom DC/DC converter (30) with a first bottom side (31) and a second bottom side (32),
- a switching circuit (13), and
- a controller (14),
wherein the first top side (21) and the first bottom side (31) are coupled in parallel to the first voltage converter side (11),
wherein the controller (14) is configured to control the switching circuit (13) such that the second top side (22) and the second bottom side (32) are coupled to the second voltage converter side (12) in parallel in a parallel operation (OP) or in series in a series operation (OS),
wherein the voltage converter (10) is configured to provide power from the first voltage converter side (11) to the second voltage converter side (11) in a first mode and to provide power from the second voltage converter side (12) to the first voltage converter side (11) in a second mode, and wherein after a start of the first mode, the controller (14) is configured to operate the switching circuit (13) in the parallel operation (OP), then to switch the switching circuit (13) from the parallel operation to the series operation (OS) in a change-over mode (COM) and then to operate the switching circuit (13) in the series operation (OS).

2. The voltage converter (10) of claim 1, wherein the controller (14) is configured to set the top DC/DC converter (20) and the bottom DC/DC converter (30) in an idle state during the change-over mode (COM).

3. The voltage converter (10) of claim 1 or 2, wherein in the parallel operation (OP), the controller (14) is configured to operate first in a pre-charge mode (PCM) and second in a constant current mode (CCM).

4. The voltage converter (10) of claim 3, wherein in the pre-charge mode (PCM), the controller (14) is configured to control the top DC/DC converter (20) and the bottom DC/DC converter (30) such that an output voltage (VOUT) of the voltage converter (10) at the second voltage converter side (12) rises up to a pre-charge voltage value (VPCH) and an output current (IOUT) is less than an initial reference current value (IR1).

5. The voltage converter (10) of claim 3 or 4, wherein in the constant current mode (CCM), the controller (14) is configured to control the top DC/DC converter (20) and the bottom DC/DC converter (30) such that the output current (IOUT) rises up to a final reference current value (IR2) and remains at the final reference current value (IR2), whereas the output voltage (VOUT) rises up to a change-over threshold value (VTH).

6. The voltage converter (10) of one of claims 1 to 5, wherein in the series operation (OS), the controller (14) is configured to operate first in a further constant current mode (FCCM) and second in a constant voltage mode (CVM).

7. The voltage converter (10) of claim 6, wherein in the further constant current mode (FCCM), the controller (14) is configured to control the top DC/DC converter (20) and the bottom DC/DC converter (30) such that the output current (IOUT) rises up to a final reference current value (IR2) and remains at the final reference current value (IR2), whereas the output voltage (VOUT) rises from the change-over threshold value (VTH) up to a final reference voltage value (VF).

8. The voltage converter (10) of claim 6 or 7, wherein in the constant voltage mode (CVM), the controller (14) is configured to control the top DC/DC converter (20) and the bottom DC/DC converter (30) such that the output voltage (VOUT) remains at the final reference voltage value (VF).

9. The voltage converter (10) of one of claims 1 to 8, wherein the controller (14) is configured to provide a top PWM signal (ST) to the top DC/DC converter (20) and a bottom PWM signal (SB) to the bottom DC/DC converter (30), and wherein the controller (14) is configured to generate a top phase angle (PHT) of the top PWM signal (ST) and a bottom phase angle (PHB) of the bottom PWM signal (SB) as a function of a difference of an actual top voltage (VT) at the second top side (22) and an actual bottom voltage (VB) at the second bottom side (32).

10. The voltage converter (10) of claim 9, wherein the controller (14) comprises a voltage feed-forward controller (15) having inputs for receiving the difference of the actual top voltage (VT) and the actual bottom voltage (VB), an upper limit and a lower limit,
wherein the voltage feed-forward controller (15) is configured to generate an output forward signal (PHOF) as a function of the signals at the inputs of the voltage feed-forward controller (15), and
wherein the controller (14) is configured such that the top phase angle (PHT) and the bottom phase angle (PHB) depend on the output forward signal (PHOF).

11. The voltage converter (10) of claim 9 or 10, wherein in the series operation (OS), the controller (14) is configured to generate the top phase angle (PHT) and the bottom phase angle (PHB) both as a function of one value of a group consisting of an actual top current (IT) of the top DC/DC converter (20) and an actual bottom current (IB) of the bottom DC/DC converter (30), and
in the parallel operation (OP), the controller (14) is configured to generate the top phase angle (PHT) as a function of the actual top current (IT) and to generate the bottom phase angle (PHB) as a function of the actual bottom current (IB).

12. The voltage converter (10) of one of claims 1 to 11, wherein the top DC/DC converter (20) and the bottom DC/DC converter (30) are realized as dual active bridge converters.

13. A method for controlling a voltage converter (10), wherein the voltage converter (10) comprises a first voltage converter side (11), a second voltage converter side (12), a top DC/DC converter (20), a bottom DC/DC converter (30), a switching circuit (13), and a controller (14),
wherein a first top side (21) of the top DC/DC converter (20) and a first bottom side (31) of the bottom DC/DC converter (30) are coupled in parallel to the first voltage converter side (11),
wherein the method comprises
- controlling the switching circuit (13) by the controller (14) such that a second top side (22) of the top DC/DC converter (20) and a second bottom side (32) of the bottom DC/DC converter (30) are coupled to the second voltage converter side (12) in parallel in a parallel operation (OP),
- controlling the switching circuit (13) by the controller (14) such that the second top side (22) and the second bottom side (32) are coupled to the second voltage converter side (12) in series in a series operation (OS),
- providing power by the voltage converter (10) from the first voltage converter side (11) to the second voltage converter side (11) in a first mode and providing power from the second voltage converter side (12) to the first voltage converter side (11) in a second mode, and
- after a start of the first mode, operating the switching circuit (13) by the controller (14) in the parallel operation (OP), then switching the switching circuit (13) from the parallel operation (OP) to the series operation (OS) in a change-over mode (COM) and then operating the switching circuit (13) in the series operation (OS).
